# DEMANDE DE BREVET EUROPEEN

(11) **EP 1 382 490 A1**
(43) Date de publication de la demande: **21.01.2004**
(21) Numéro de dépôt: 03291733.8
(22) Date de dépôt: 11.07.2003
(51) Int. Cl.: B60R 7/02, B60R 5/04

(54) **Agencement de sacs de transport sous une tablette arrière de véhicule automobile**

(30) Priorité: 11.07.2002 FR 0208763
(71) Demandeur: Renault s.a.s., 92100 Boulogne Billancourt (FR)
(72) Inventeur: Hewak, Grégor, 95490 Vaurel (FR); Lemar, Yannick, 78320 La Verriere (FR)

(57) **Abrégé**

L'invention concerne un agencement d'au moins un récipient (S1, S2, S3) sous la face inférieure (28) d'une tablette (24) qui délimite, de façon horizontale et vers le haut, un compartiment à bagages arrière (12) d'un véhicule automobile (10), et qui comporte au moins un orifice (O1 O2, O3) qui est fermé par un volet supérieur (V1, V2, V3) monté articulé sur la tablette (24) autour d'un axe horizontal (B) et comportant des moyens d'ouverture (34), et du type dans lequel le récipient (S1, S2, S3) comporte une entrée supérieure (26) dont le pourtour (50) est monté autour de l'orifice (O1, O2, O3) sous la face inférieure (28) de la tablette (24) par des moyens de fixation (64), de façon que l'orifice (O1, O2, O3) donne accès à l'intérieur du récipient (S1, S2, S3), caractérisé en ce que les moyens de fixation (64) sont des moyens de fixation amovible par coopération de formes complémentaires entre la tablette (24) et l'entrée du récipient (50).

## Description

L'invention concerne un agencement d'au moins un récipient sous la face d'une tablette qui délimite, de façon horizontale et vers le haut, un compartiment à bagages arrière d'un véhicule automobile.

L'invention concerne plus particulièrement un agencement d'au moins un récipient sous la face inférieure d'une tablette qui délimite, de façon horizontale et vers le haut, un compartiment à bagages arrière d'un véhicule automobile, et qui comporte au moins un orifice qui est fermé par un volet supérieur monté articulé sur la tablette autour d'un axe horizontal et comportant des moyens d'ouverture, et du type dans lequel le récipient comporte une entrée supérieure dont le pourtour est monté autour de l'orifice sous la face inférieure de la tablette par des moyens de fixation, de façon que l'orifice donne accès à l'intérieur du récipient.

Les véhicules automobiles, et notamment les véhicules automobiles munis d'un hayon, comportent dans la partie arrière de l'habitacle un compartiment à bagages qui s'étend généralement en arrière du dossier d'une banquette arrière. Ce type de véhicule comporte une tablette qui s'étend généralement longitudinalement depuis le hayon jusqu'au haut du dossier d'une banquette arrière de manière à recouvrir le compartiment à bagages et à le séparer de l'habitacle.

Il est courant de transporter dans le compartiment à bagages de petits articles, tels que des boîtes de conserves ou autres articles de ravitaillement. Le compartiment à bagages est souvent trop spacieux pour que ces articles puissent être calés par rapport au fond du compartiment. Lorsque le véhicule freine ou tourne, les différents articles s'entrechoquent ou sont renversés. De plus, le chargement et le déchargement des articles est généralement peu ergonomique, à cause de la hauteur insuffisante du fond du compartiment à bagages par rapport au sol, c'est-à-dire à cause de la profondeur du coffre à bagages.

Plusieurs solutions ont été proposées pour répondre à ce problème. Par exemple les documents US-A-4.189.056 et US-A-4.226.348 proposent des casiers amovibles permettant de ranger et de caler de petits articles. Cependant ce type de casier n'est pas immobile par rapport au fond du compartiment à bagages. C'est donc le casier lui-même qui est sujet à des mouvements indésirables lorsque le véhicule est soumis à des accélération. De plus, ces casiers encombrent inutilement le compartiment à bagages lorsqu'ils ne sont pas utilisés.

Le document US-A-4.718.584 propose un système de cloisons verticales pliables qui sont calées horizontalement entre les parois verticales du compartiment à bagages. Cependant cette solution ne résout pas le problème de l'ergonomie de chargement et de déchargement. De plus, même pliées à plat, les cloisons encombrent le fond de compartiment à bagages.

La présente invention propose de résoudre ces problèmes par un agencement du type décrit précédemment, caractérisé en ce que les moyens de fixation sont des moyens de fixation amovible par coopération de formes complémentaires entre la tablette et l'entrée du récipient. Selon d'autres caractéristiques de l'invention :
- les moyens de fixation comportent :
   - un cadre rigide formant le pourtour de l'entrée du récipient et comprenant deux rebords latéraux qui s'étendent transversalement vers l'extérieur ; et
   - deux glissières longitudinales parallèles et opposées qui sont agencées sous la face inférieure de la tablette, de part et d'autre de l'orifice, et dans lesquelles les rebords latéraux sont reçus en coulissement horizontal, le récipient pouvant coulisser entre une position engagée d'utilisation et une position dégagée des glissières.
- la position engagée du cadre d'entrée est déterminée par une butée portée par la face inférieure de la tablette.
- la butée est une glissière transversale dans laquelle est engagé un rebord frontal du cadre d'entrée.
- l'agencement comporte des moyens de blocage longitudinal du cadre d'entrée en position engagée.
- le cadre d'entrée comporte une anse avant et une anse arrière qui s'étendent longitudinalement vers l'avant et vers l'arrière du cadre d'entrée respectivement.
- le récipient est un sac souple dont l'extrémité supérieure est constituée par le cadre d'entrée qui est formé de deux parties avant et arrière montées articulées l'une sur l'autre autour d'un axe transversal.
- le sac comporte un fond rigide et globalement plat susceptible de contenir les flancs souples du sac repliés sur eux-mêmes
- l'agencement comporte des moyens de verrouillage du fond du sac contre la tablette dans une position de rangement.
- les moyens de verrouillage du sac en position de rangement sont commandés par les moyens d'ouverture du volet pour libérer le sac lors de l'ouverture du volet.

D'autres caractéristiques et avantages de l'invention apparaîtront au cours de la lecture de la description détaillée qui suit pour la compréhension de laquelle on se reportera aux dessins annexés, parmi lesquels :
- la figure 1 est une vue schématique en perspective de l'arrière d'un véhicule automobile qui comporte une tablette arrière équipée de trois sacs de rangement réalisés selon les enseignements de l'invention ;
- la figure 2 est une vue selon la même perspective que la figure 1 de la tablette arrière de la figure 1 équipée d'un premier sac de transport en position d'utilisation et d'un second sac de transport en position dégagée ;
- la figure 3 est une vue d'un sac de transport en position close ;
- la figure 4 représente la tablette de la figure 2 équipée de sacs, selon une vue en perspective opposée à celle de la figure 2 ;
- la figure 5 est une vue en section selon le plan de coupe 5-5 de la figure 4, le volet étant ici représenté en position fermée et verrouillée ;
- la figure 6 est une vue en section de la figure 4 selon le plan de coupe 6-6.

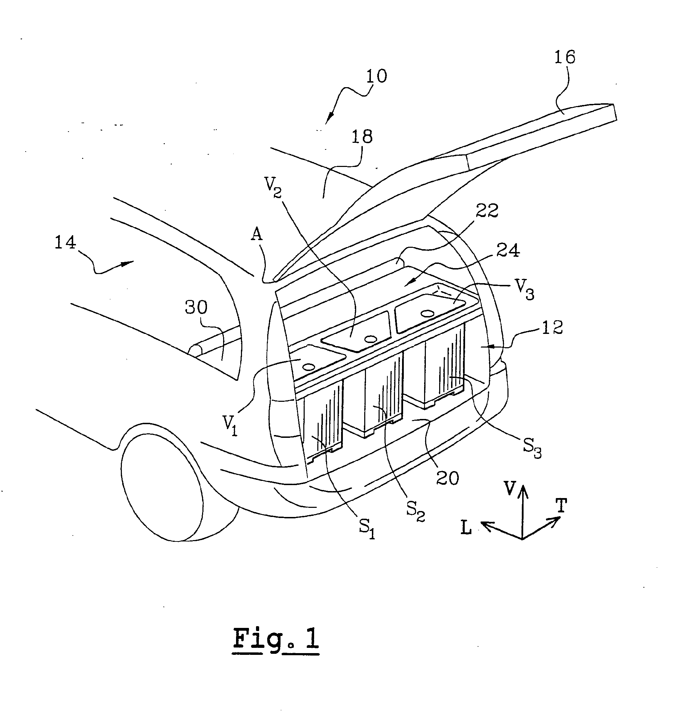

Dans la description qui va suivre, on adoptera à titre non limitatif une orientation verticale, longitudinale et transversale selon l'orientation traditionnellement utilisée dans l'automobile et indiquée par le trièdre L, V, T de la figure 1.

On utilisera des mêmes chiffres de référence pour indiquer des éléments analogues, similaires ou identiques.

On a représenté à la figure 1, l'arrière d'un véhicule automobile 10 comportant un compartiment à bagages 12, ou coffre, qui occupe une partie arrière de l'habitacle 14.

Le compartiment à bagages 12 est notamment délimité vers l'arrière par une porte transversale arrière 16 qui est ici articulée par rapport à l'arrière du pavillon 18 du véhicule 10, autour d'un axe transversal supérieur A, entre une position supérieure d'ouverture, et une position inférieure de fermeture.

Le compartiment à bagages 12 est aussi délimité par un plancher horizontal 20 et par la face postérieure verticale du dossier 22 d'une banquette transversale arrière du véhicule 10.

Une tablette 24, ou plage arrière horizontale, s'étend depuis un bord supérieur du dossier 22 sensiblement jusqu'à la porte arrière 16 de façon à séparer totalement le compartiment à bagages 12 de l'habitacle 14.

La porte arrière 16 est représentée sur la figure 1 en position supérieure d'ouverture. On voit ainsi que le compartiment à bagages 12 comporte des sacs de transport S1, S2, S3 qui sont suspendus de façon amovible, par leur ouverture supérieure 26, sous une face inférieure 28 de la tablette 24. Les sacs de transport S1, S2, S3 sont ici et à titre non limitatif au nombre de trois.

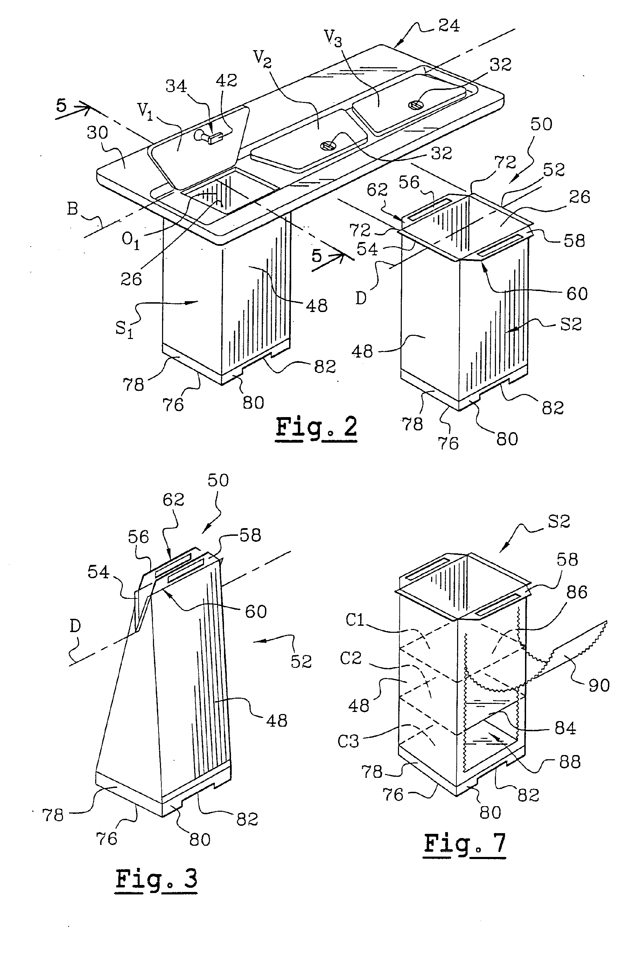

On a représenté à la figure 2 une vue détaillée de la tablette 24. La tablette 24 comporte notamment trois orifices O1, O2, O3 dont chacun donne accès à l'intérieur d'un sac de transport S1, S2, S3, respectivement. Les orifices d'accès O1, O2, O3 sont globalement rectangulaires. Ils sont alignés transversalement le long de la tablette 24.

Ils sont susceptibles d'être chacun masqué par un volet supérieur V1, V2, V3. Les volets V1, V2, V3 sont ici globalement similaires entre eux et ils sont articulés sur la face supérieure 26 de la tablette 24 de façon sensiblement analogue autour d'un même axe transversal avant B entre une position verticale avant d'ouverture et une position horizontale de fermeture de manière à permettre l'accès individualisé aux sacs S1, S2, S3 depuis l'arrière du véhicule 10.

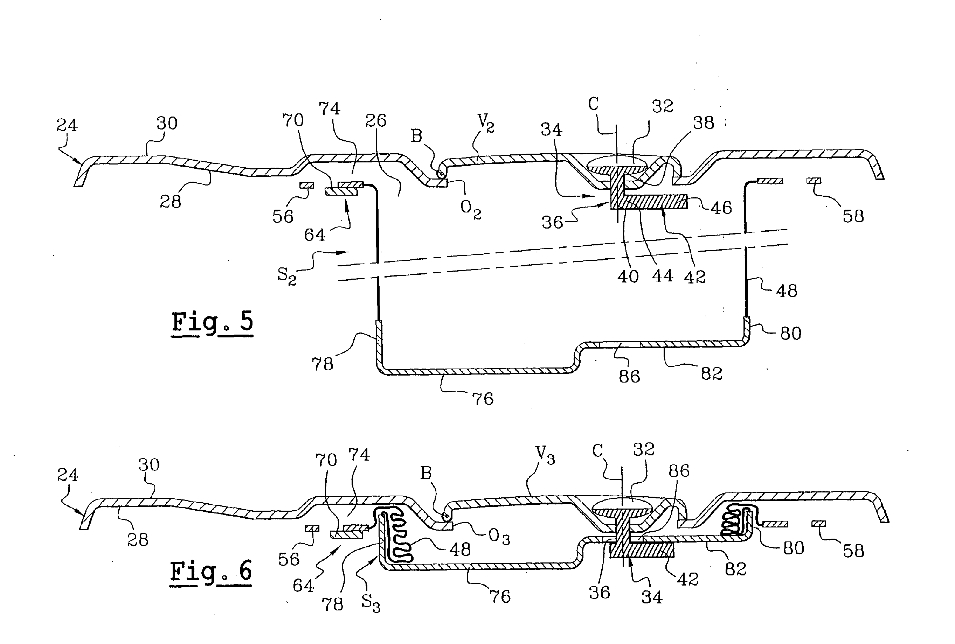

Chaque volet V1, V2, V3 est équipé d'une poignée d'ouverture arrière 32 qui est notamment destinée à permettre à un utilisateur, situé à l'extérieur du véhicule 10, de déplacer le volet V1, V2, V3 entre sa position d'ouverture et sa position de fermeture en passant par l'ouverture arrière. Cette poignée 32 commande un mécanisme de verrouillage 34 du volet V1, V2, V3. Comme illustré à la figure 5, le mécanisme de verrouillage 34 comporte notamment un pivot vertical 36 qui est monté à rotation autour d'un axe vertical C par rapport au volet V1, V2, V3 entre une position verrouillée du volet et une position déverrouillée du volet. La poignée 32 est fixée sur l'extrémité supérieur 38 du pivot 36. Le pivot 36 traverse le volet V1, V2, V3 de façon que sa seconde extrémité inférieure 40 soit située sous la tablette 24. Une clenche horizontale 42 est fixée par une première extrémité fixe 44 sur la seconde extrémité inférieure 40 du pivot 36.

Lorsque le volet V1, V2, V3 est en position de fermeture et le mécanisme de verrouillage 34 est en position verrouillée, la clenche 42 est orientée longitudinalement de façon que sa seconde extrémité libre 46 soit globalement en contact avec la face inférieure 28 de la tablette 24, immobilisant ainsi sensiblement le volet V1, V2, V3 dans sa position de fermeture.

Dans la position déverrouillée du mécanisme de verrouillage, la clenche 42 est orientée transversalement de façon que sa seconde extrémité libre 46 soit en regard du volet V1, V2, V3 et ne soit plus en regard de la tablette 24 lors du mouvement d'ouverture du volet V1, V2, V3.

La tablette 24 représentée à la figure 2 est équipée de trois sacs S1, S2, S3 associés chacun à l'un des orifices O1, O2, 03 dont celui de droite S3 n'est pas visible. Le sac S2 situé au centre sur la figure 2 est représenté dans une position dégagée vers l'arrière dans laquelle le sac S2 est désolidarisé de la tablette 24. Les sacs S1, S2, S3 sont ici tous les trois globalement identiques. La description du sac central S2 sera donc applicable de façon globalement identique aux deux autres sacs S1, S3.

Le sac S2 comporte des flancs 48 réalisés en matière souple, par exemple en tissu ou en papier, de façon à en faciliter le rangement. Le pourtour de son ouverture supérieure 26 est délimité par un cadre rigide 50 qui a ici une forme globalement carrée.

Le cadre 50 comprend deux rebords 52, 54 latéraux et longitudinaux qui s'étendent transversalement vers l'extérieur du cadre 50 . Il comporte aussi deux anses frontale 56 et arrière 58 qui s'étendent longitudinalement vers l'avant et vers l'arrière, respectivement.

Le cadre 50 est ici complètement divisé en deux éléments avant 60 et arrière 62 globalement symétriques par rapport à un axe transversal D autour duquel les deux éléments 60, 62 sont articulés entre une position horizontale d'ouverture et une position verticale supérieure de clôture.

Dans cette position de clôture, les deux anses 56, 58 sont adjacentes et forment une anse unique qui permet notamment à un utilisateur de saisir le sac S2 avec une seule main. Cette position de clôture du sac est illustrée par le sac S2 représenté à la figure 3.

Dans une variante non représentée, le cadre comporte des moyens de blocage en position fermée ou/et en position ouverte.

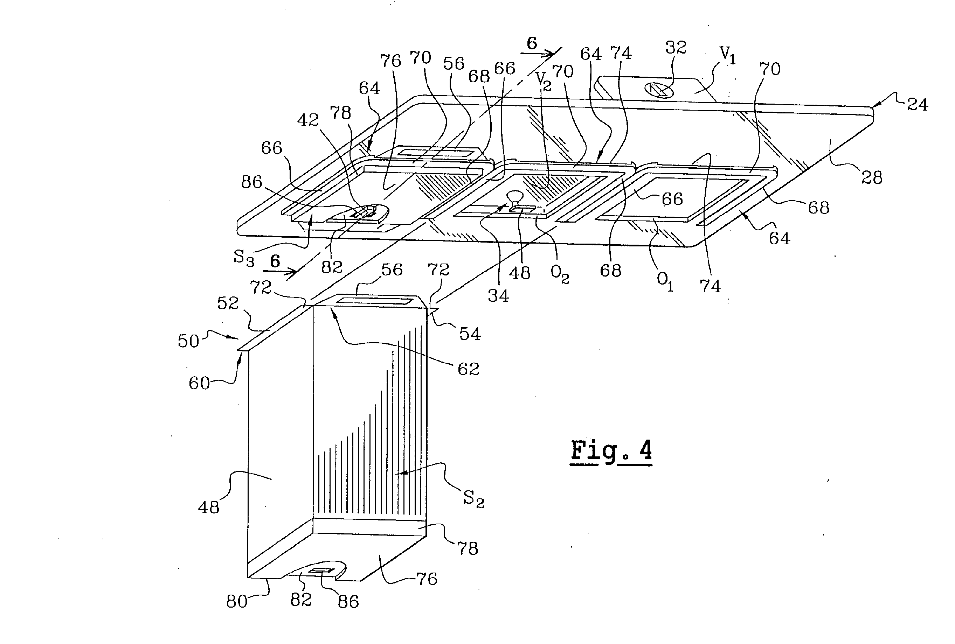

La tablette 24 est équipée pour chaque orifice d'accès O1, O2, O3 de moyens de fixation amovible 64 qui permettent l'agencement des sacs de transport S1, S2, S3 sous la face inférieure 28 de la tablette 24 par coopération de formes complémentaires avec le cadre 50 des sacs S1, S2, S3. Ces moyens de fixation 64 sont identiques pour les trois sacs S1, S2, S3. Ils sont notamment visibles sur la figure 4 autour des orifices d'accès droit O1 et central O2.

Les moyens de fixation 64 comportent notamment deux glissières longitudinales 66, 68 parallèles et opposées qui sont ici fixées sous la face inférieure 28 de la tablette 24, de manière à encadrer transversalement l'orifice d'accès O1, O2, O3. Les glissières 66, 68 sont destinées à recevoir en coulissement les rebords latéraux 52, 54 du sac S1, S2, S3.

Une troisième glissière frontale 70 est fixée sur la face inférieure 28 de la tablette 24 à l'avant de chaque orifice O1, O2, O3. Cette glissière frontale 70 est notamment destinée à faire butée avec l'extrémité avant 72 des rebords latéraux 52, 54 du cadre 50, définissant ainsi une position engagée d'utilisation du sac S1, S2, S3 qui est ici illustrée par le sac S1 représenté à gauche à la figure 2.

La glissière frontale 70 est également destinée à supporter l'anse frontale 56 du cadre 50, et donc à supporter le cadre 50 en coopération avec les deux glissières latérales 66, 68. Une lumière transversale 74 est ici réalisée dans le fond vertical de la rainure de la glissière frontale, afin de permettre le passage d'une partie de l'anse avant 56 du sac S1, S2, S3.

Chaque sac S1, S2, S3 comporte aussi un fond rigide 76, globalement plat, dont la périphérie 78 est recourbée vers le haut de façon à former une cuvette. Le fond rigide 76 est susceptible de contenir les flancs 48 du sac S1, S2, S3 dans une position de rangement du sac de transport. Cette position est illustrée par le sac S3 représenté à gauche à la figure 4.

Le cadre 50 du sac S3 est alors en position engagée d'utilisation et le fond rigide 76 est remonté vers le haut jusqu'à ce que son bord périphérique 78 soit remonté horizontalement contre la face inférieure 28 de la tablette 24 afin de former un rangement pour les flancs souples 48 du sac S3. Les bords périphériques 78 du fond 76 sont alors entourés horizontalement par le cadre 50 du sac S3.

Comme illustré à la figure 6, l'épaisseur du fond 76 est ici sensiblement constante. Le bord frontal 80 du fond rigide 76 comporte en son milieu un enfoncement 82 vers le haut qui a ici une section horizontale en forme de « U ». L'enfoncement 82 comporte une fente transversale 86 à travers laquelle la clenche 42 du mécanisme de verrouillage 34 est susceptible de passer en position déverrouillée.

Ainsi, lorsque le mécanisme de verrouillage 34 est en position verrouillée, la clenche 42 coopère avec la face inférieure de l'enfoncement 82 pour empêcher le fond 76 de retomber et maintenir le sac S1, S2, S3 en position de rangement.

Nous allons à présent décrire l'utilisation d'un tel agencement.

Lorsque les sacs S1, S2, S3 sont en position de rangement, ils occupent un espace de faible épaisseur sous la tablette arrière 24, laissant libre le plancher 20 du compartiment à bagages 12. Il est ainsi possible de charger des bagages encombrants dans le compartiment à bagages 12 sans avoir à en retirer les sacs de transport S1, S2, S3.

Lorsque l'utilisateur à besoin d'un sac de transport S1, S2, S3, par exemple pour charger le contenu d'un chariot de courses d'alimentations, il saisit la poignée 32 et la tourne autour de l'axe vertical C du pivot 36. La clenche. 42 pivote autour de l'axe vertical C jusqu'à ce qu'elle soit orientée transversalement et elle passe alors à travers la fente 86 du fond rigide 76. Le fond 76 n'étant plus retenu par la clenche 42, le sac S1, S2, S3 est libéré et il est alors suspendu en position d'utilisation. Le poids du sac est supporté par les trois glissières longitudinales 66, 68 et transversale 70 sur lesquelles les trois bords du cadre d'entrée 50 du sac prennent appui.

Le mécanisme de verrouillage 34 du volet V1, V2, V3 est alors en position déverrouillée. L'utilisateur peut donc faire pivoter le volet autour de son axe transversal B jusqu'à la position d'ouverture. Il peut ainsi remplir le sac de transport S1, S2, S3 en faisant passer les articles à charger par l'orifice d'accès 01, 02, 03.

Lorsque le remplissage du sac de transport S1, S2, S3 est terminé, l'utilisateur rabat le volet V1, V2, V3 qui pivote autour de son axe transversal B jusqu'à la position de fermeture. Il peut alors pivoter la poignée 32 autour de son axe vertical C de façon à bloquer le volet par l'intermédiaire du mécanisme de verrouillage 34 . La clenche 42 pivote alors autour de l'axe vertical C jusqu'à atteindre la position de verrouillage du mécanisme de verrouillage 34.

Pour décharger le sac de transport du compartiment à bagages 12, l'utilisateur saisit l'anse arrière 58 du sac et le tire vers l'arrière. Les bords latéraux 52, 54 du cadre 50 glissent alors dans les glissières longitudinales 66, 68 jusqu'à ce que le sac soit dans sa position dégagée dans laquelle il n'est plus porté par les moyens de fixation 64.

L'utilisateur relève ensuite verticalement les deux éléments 60, 62 du cadre 50 l'un contre l'autre en les faisant pivoter autour de leur axe transversal D jusqu'à ce que le sac soit en position de clôture.

Selon une variante non représentée de l'invention, les moyens de fixation comportent des moyens de blocage longitudinal du cadre du sac en position engagée d'utilisation. Les moyens sont par exemple des moyens par coopération de formes complémentaires, déformables élastiquement, entre le cadre et la tablette.

Selon une autre variante non représentée, le fond 76 du sac comporte des moyens de fixation amovible du fond du sac 76 par rapport au plancher 20 du compartiment à bagages 12 lorsque le sac est en position d'utilisation. Le fond 76 est ainsi maintenu immobile par rapport au plancher 20 de façon à éviter les mouvements indésirables du fonds 76 par exemple lorsque le véhicule est soumis à des accélérations.

Selon une autre variante représentée à la figure 7, le sac S2 comporte ici deux cloisons horizontales 84, 86 réalisées en matière souple de façon à diviser verticalement le sac S2 en trois compartiments C1, C2 et C3 qui so nt ici de hauteurs sensiblement égales. Les cloisons horizontales 84, 86 sont par exemple réalisées dans une matière similaire à celle constituant les flancs 48.

Les flancs 48 du sac S2 comportent ici une ouverture arrière 88 d'accès aux trois compartiments C1, C2, et C3. L'ouverture d'accès 88 est susceptible d'être obturée par un pan vertical 90 de matière souple qui est avantageusement réalisé dans la même matière que celle constituant les flancs 48. La partie supérieure du pan 90 est fixée au cadre 50. Le pan 90 forme flanc 48 du sac S2 lorsqu'il est en position d'obturation.

Le pan de matière souple comporte des moyens de maintien en position d'obturation par coopération avec les flancs du sac, par exemple une fermeture éclair ou des fermetures velcro s'étendant sur le pourtour du pan.

Dans une position haute d'accès aux compartiments C1, C2, C3 (non représentée), le pan 90 est enroulé, de bas en haut, transversalement sous l'anse arrière 58. Le pan 90 est maintenu dans la position d'accès aux compartiments C1, C2 et C3 par des moyens de maintien (non représentés) tels que des lanières ou des boutons coopérant avec une boutonnière ou des boutons-pression.

## Revendications

1. Agencement d'au moins un récipient (S1, S2, S3) sous la face inférieure (28) d'une tablette (24) qui délimite, de façon horizontale et vers le haut, un compartiment à bagages arrière (12) d'un véhicule automobile (10), et qui comporte au moins un orifice (O1, O2, O3) qui est fermé par un volet supérieur (V1, V2, V3) monté articulé sur la tablette (24) autour d'un axe horizontal (B) et comportant des moyens d'ouverture (34), et du type dans lequel le récipient (S1, S2, S3) comporte une entrée supérieure (26) dont le pourtour (50) est monté autour de l'orifice (O1, O2, O3) sous la face inférieure (28) de la tablette (24) par des moyens de fixation (64), de façon que l'orifice (O1, O2, O3) donne accès à l'intérieur du récipient (S1, S2, S3),
**caractérisé en ce que** les moyens de fixation (64) sont des moyens de fixation amovible par coopération de formes complémentaires entre la tablette (24) et l'entrée du récipient (50).

2. Agencement selon la revendication précédente, **caractérisé en ce que** les moyens de fixation (64) comportent :
- un cadre rigide (50) formant le pourtour de l'entrée (26) du récipient (S1, S2, S3) et comprenant deux rebords latéraux (52, 54) qui s'étendent transversalement vers l'extérieur ; et
- deux glissières longitudinales (66, 68) parallèles et opposées qui sont agencées sous la face inférieure (28) de la tablette (24), de part et d'autre de l'orifice (O1, O2, O3), et dans lesquelles les rebords latéraux (52, 54) sont reçus en coulissement horizontal, le récipient (S1, S2, S3) pouvant coulisser entre une position engagée d'utilisation et une position dégagée des glissières (66, 68).

3. Agencement selon la revendication précédente, **caractérisé en ce que** la position engagée du cadre d'entrée (50) est déterminée par une butée (70) portée par la face inférieure (28) de la tablette (24).

4. Agencement selon la revendication précédente, **caractérisé en ce que** la butée est une glissière transversale (70) dans laquelle est engagé un rebord frontal (56) du cadre d'entrée (50).

5. Agencement selon la revendication 3 ou 4, **caractérisé en ce qu'**il comporte des moyens de blocage longitudinal du cadre d'entrée (50) en position engagée.

6. Agencement selon l'une des revendications 2 à 5, **caractérisé en ce que** le cadre d'entrée (50) comporte une anse avant (56) et une anse arrière (58) qui s'étendent longitudinalement vers l'avant et vers l'arrière du cadre d'entrée (50) respectivement.

7. Agencement selon la revendication précédente, **caractérisé en ce que** le récipient est un sac souple (S1, S2, S3) dont l'extrémité supérieure est constituée par le cadre d'entrée (50) qui est formé de deux parties avant (62) et arrière (60) montées articulées l'une sur l'autre autour d'un axe transversal (D).

8. Agencement selon la revendication précédente, **caractérisé en ce que** le sac (S1, S2, S3) comporte un fond (76) rigide et globalement plat susceptible de contenir les flancs souples (48) du sac (S1, S2, S3) repliés sur eux-mêmes

9. Agencement selon la revendication précédente, **caractérisé en ce qu'**il comporte des moyens de verrouillage (34) du fond (76) du sac (S1, S2, S3) contre la tablette (24) dans une position de rangement.

10. Agencement selon la revendication précédente prise en combinaison avec la revendication 1, **caractérisé en ce que** les moyens de verrouillage (34) du sac (S1, S2, S3) en position de rangement sont commandés par les moyens d'ouverture (34) du volet (V1, V2, V3) pour libérer le sac (S1, S2, S3) lors de l'ouverture du volet (V1, V2, V3).
